# EUROPEAN PATENT APPLICATION

(11) **EP 3 139 065 A2**
(43) Date of publication of application: **08.03.2017**
(21) Application number: 16386013.3
(22) Date of filing: 01.08.2016
(51) Int. Cl.: F16H 21/18

(54) **A CONVERTOR OF DYNAMIC TO ROTATIONAL MOTION OF TWO CRANKSHAFTS**

(30) Priority: 31.08.2015 GR 20150100381
(71) Applicant: Mastrokalos, Antonios, 84003 Sifnos (GR)
(72) Inventor: Mastrokalos, Antonios, 84003 Sifnos (GR)

(57) **Abstract**

The invention relates to a reciprocal-type engine, which requires force on the end of a pushrod, in order to convert it to rotational motion. This is achieved by the coupling of two crankshafts (1), (2) which each has a gear at each end (7), (8) thereof, with an intermediate gear (6) of the same features, so that at each angular displacement of the main crankshaft (1), of larger side (25), follows exactly the secondary one (2), with a smaller side (26). The pushrod (5) ties the crankshafts with their journals (3), (4) to a yoke (9). As a result, the pushrod (5) where at its end the convertible force is applied, and due to its relatively large length, supersedes the resistances of frictions and load, resulting to an easy rotational motion of the crankshaft.

## Description

The invention relates to a reciprocal engine, which requires only dynamic energy for its operation, and converts it to rotational kinetic energy.

The various types of engines have been invented in the past, such as the heat engines and fuel cell engines, for the conversion of chemical energy to kinetic, which operate stably but cause high thermal unexploited losses, thereby contributing to the greenhouse effect. On the other side, the exploitation of nuclear reactors present various risks with enormous impacts, making these potentially dangerous for the environment and mankind. Additionally, the combinations exploiting renewable energy sources do not provide solutions capable to cover the energy demands, since they do not provide a permanent energy supply.

Compared dynamically to the thermal reciprocal engines, which provide useful energy per rotation and depending on the thermodynamic type of operation, they are either two-stroke or four-stroke, by minimal degrees during the combustion-expansion phase and only, while they have lost energy during the necessary phases of compression and air scanning-gas exhaustion, plus the cooling losses, the energy converters disclosed here continuously operate with almost the same intensity and for 360 degrees, while the heat quantities produced and discharged during their operation are minimal. Also, if the manufacturing materials are synthetic, which are non-expandable and self-lubricating, then the produced heat quantities are further minimized.

Based on the first law of thermodynamics, a two-crankshaft engine is provided below, which operates autonomously, ecologically, by converting dynamic energy to rotational energy, obviating all the said undesirable impacts. An advantages of the above is that the said engines may serve a plurality of needs and power demands, ranging from milli-watts to thousands of kilowatts. For example, an electric-power producing set of engine-generator, of a size of a battery of each portable and, not only, electronic-electric device, replaces fully that, obviating the need for wires, chargers and batteries. They are not subjected to any climate limitation or elevation height. Additionally, they present no problem of orientation of the fixation base, while they can operate under air vacuum, pressurized or is space, and they can operate under toxic or volatile gases. They are free from fuel supply networks and there is no danger of clogging of lubrication filters, since the oils are not subjected to pollutants. Thus they are suitable for remote control, without needing human presence for inspection.

All reciprocal engines operate in the presence of a force on the journal of the crankshaft, which force cannot be applied throughout the rotation period. On the contrary, in the two-crankshaft engine presented here, the applicafion of force on its journal is continuous and uninterrupted, throughout the rotation, always keeping the same rotation direction. The operation of the engines of this kind, converting dynamic energy to rotational energy, is achieved by the use and coupling via the chain of two crankshaft, one main and one secondary, which are connected between them by three identical gears. The two of these are wedged at the ends of one side of each crankshaft while the third one is arranged between them, all the gears being of the same diameter, so that the two crankshafts when in motion move angularly with the same direction and rotational speed. The basic difference of the main crankshaft is the slightly larger length of the journal fixation sides or arms, compared to that of the secondary. Reducing to a system of lever arms, the main crankshaft constitutes the application element of the resistance of the engine, while the fulcrum is located at its journal, with the sides constituting the length of the fulcrum arm and point of applied resistance, of this system. The second crankshaft with its sides and journal constitutes the controller of the position of the yoke and orientation of the pushrod, i.e. of the large-length lever arm of the system, defined by the position of the fulcrum, i.e. of the main crankshaft journal to the point of its end, where the convertible force is applied. This large-length arm will be herein designated as pushrod. Thus the pushrod is connected at its end to the journal of the main crankshaft, while with the second crankshaft it is connected via the journal-type pins which are introduced in the yoke. The journals of the crankshafts in this type of engine are permanently fixed on their arms. Thus, without any interventions, as will be disclosed hereinafter, the end of the pushrod on which the controllable force to be converted is applied, executes linear reciprocal motion, while the body of the pushrod with the arms and the line of the centers of the crankshafts and the end of the pushrod where the force is applied form continuously variable triangles during rotation, while the journal arms between them with the individual length of the pushrod enclosed between the journals at each different angle and the inter-center distance of the centers of the crankshafts continuously form continuously variable obtuse trapezoid. As it will be shown in the detailed figures, the smaller the difference in the length of the sides or the arms of the journals, the higher may be the length of the pushrod and the smaller the intensity of the applied force to be converted.

In an alternative embodiment of the invention of the two-crankshaft engines, the use of chain wheels of the same diameter on the ends of the crankshafts and their coupling with a chain is provided. Thereby the condition of the same rotational speed and motion of the same direction for both crankshafts is provided.

It is recommended to apply a motion stop, especially for the engines of which each crankshaft consists only of one journal, to prevent rocking and an undesirable rotation direction, if the crankshaft is at 0 or 360 degrees, during starting. Such a problem is not present in the case of engines with crankshafts having more journals. If however an engine is equipped with two motion stops in series on the same axle, with the capability to select braking of each one of them, then the reversion of the engine is achieved, without other additional interventions-additions. Thus, for propulsion engines of vessels and especially vehicles, where the reversion is necessary and achieved in this way, no control box for the output revolutions of the unit are necessary.

Thus, based on the above-mentioned mode of operation of the engines of this type, the total length of the push rod, i.e. of the part of the level arm between the journal of the main crankshaft, where the fulcrum of the system and the small part of this system, i.e. of the sides of the same crankshaft, where the resistance and in particular the load of the engine is applied, is significantly larger. Thus, by the application of a force of even a small intensity on the other end of the pushrod, all friction forces and resistance can be obviated and motion may start. If this application of force continues, then the motion will become rotational, the larger it is, the higher will be the rotational speed and the developed power of engine.

Since the dynamic magnitudes, of the side of the pushrod where the operation force to be converted is applied, are controllable and easily variable, so that the control of the rotational speed and torque is precise, then correspondingly they will either exceed the also variable, dynamic ones of the other side where the load is applied, which an engine has to handle, thereby keeping a smooth rotational motion. If this is not desirable, the dynamic magnitudes, of both sides or areas, may be made equal and bring the engine to a stop. Respectively, from the rest position, in an corresponding but opposite way, an imbalance or disturbance may be caused, by applying such a conversion, at the end of the pushrod and the operation of the engine starts.

These and other features and the ecological advantages from the operation of the engines, as well as the full independence from each energy need, are presented below in the following detailed description. The invention will be fully understood with reference to the accompanying figures, which depict an exemplary embodiment thereof.

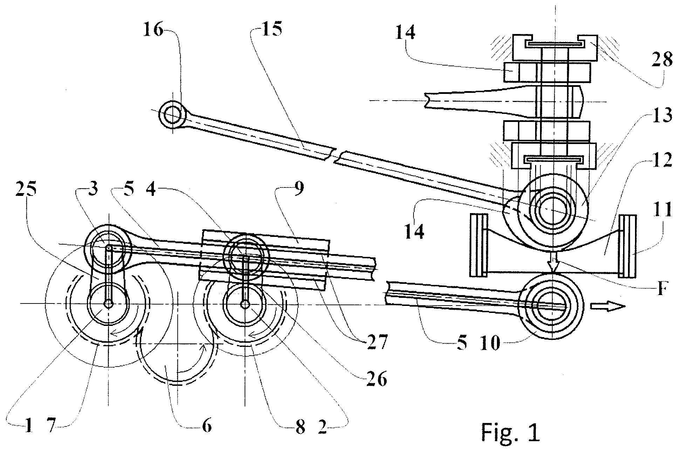

Figure 1 shows all the details, in front view of an exemplary way by which the end of a push rod, where a force is applied to be converted to rotational motion, reciprocates in a linear line, and where the direction of the applied convertible motion in relation to the body of the pushrod is not diverted significantly from the vertical. This is feasible by the use of two crankshafts, the main one on the left, and the secondary one on the right of the main, with respective journal sides each, and the connection yoke of the pushrod, which is directly connected to the journal of the secondary. The crankshafts are equipped with gears of the same diameter, coupled with an intermediate one of the same diameter, so that the same rotational speed, direction and thus angular displacement are retained. The crankshafts are at positions of 0 or 360 degrees. The rotational stresses of the crankshafts and of the gears are shown by respective arrows, while the pushrod moves to the right.

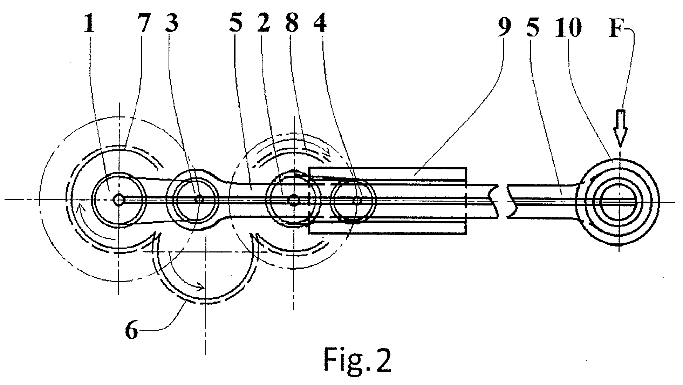

Figure 2 shows in front view both crankshafts being turned to an angle of 90 degrees. The applied force to be converted is absolutely vertical at the end of the body of the pushrod, this being instantly immobilized, and ready to change the motion path to the left.

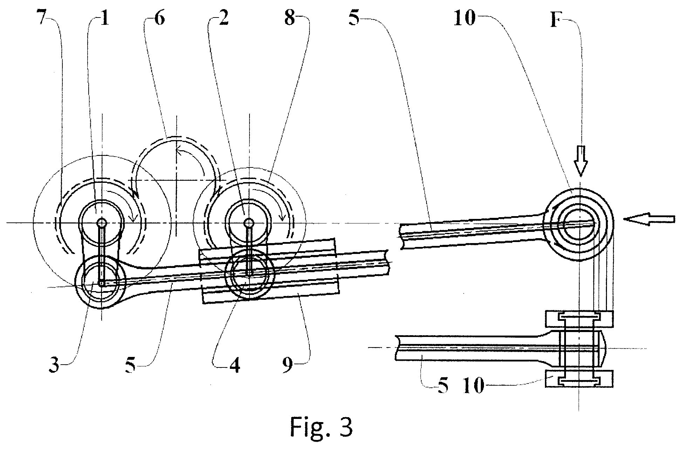

Figure 3 shows the crankshafts in perspective, while they have been rotated and are at 180 degrees simultaneously. A position reverse to that of 0 or 360 degrees, where the pushrod moves to the left, while the crankshafts keep the same clockwise rotational motion. The direction of the convertible force diverges slightly to the right from the body of the push rod. The push rod moves even to the left.

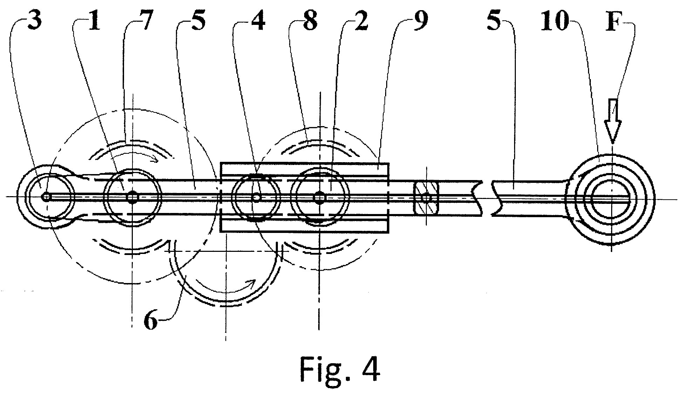

In figure 4, the crankshafts, due to the applied convertible force at the other end of the pushrod, have been parallelly displaced and presented in front view, at a position of 270 degrees. With the applied convertible force exactly vertical to the body of the pushrod and this instantly immobilized and its end ready to start to move linearly to the right.

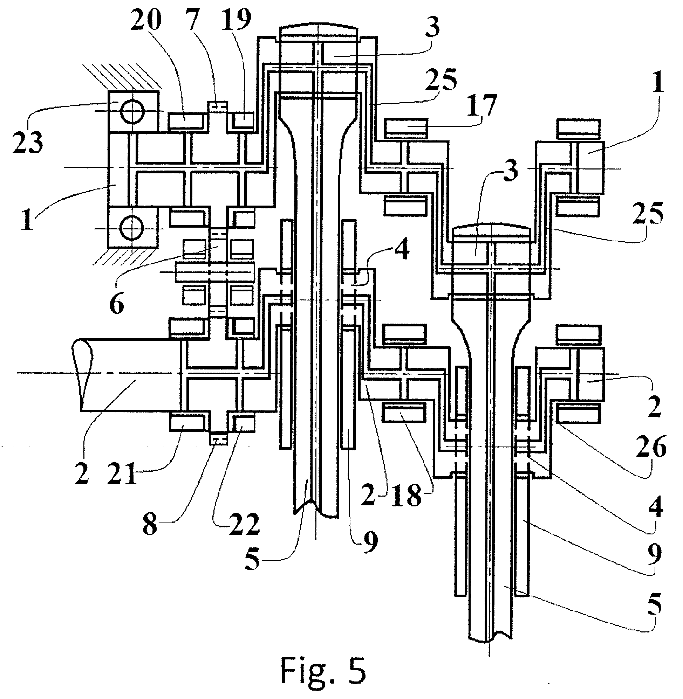

Figure 5 shows in plan view all the elements of the engines, which have crankshafts with two journals, the number of them being not limited depending on the desired power and coupled to three identical gears, with fishbone type teeth, to avoid axial thrusts on the crankshafts, also a proposed position of the motion stop is shown, which these are stops in series, it would allow the engine, by braking one of these, to reverse by selection. Here, the wedging angle of the sides or arms of the journals of each crankshaft is shown, which in the specific case is that of 180 degrees. In general, the wedging angle between the sides or journal arms of the crankshafts may be determined by the quotient from the division of 360 degrees of a circle by the number of journals of the crankshafts, so that equal distribution of the operation stresses is present.

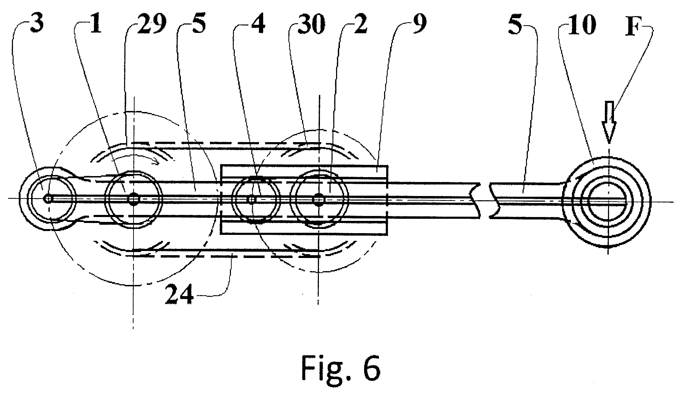

Figure 6 shows in front view, an alternative embodiment of the way of parallel or simultaneous turning of two crankshafts. Instead of gears, each crankshaft has a chain wheel, which are connected between them by a chain.

With reference to these figures, an exemplary embodiment of the invention is given.

Figure 1 shows an exemplary integrated device, exploiting the dynamic to rotational motion. The figure shows in front view the manner by which the end of a pushrod (5) with a roller conveying the applied force (10) respectively, where the force F to be converted to rotational motion is applied, pulls or pushes the main crankshaft (1), as well as the associated secondary one (2), with the connection yoke of the pushrod (9) and all the accessories in clockwise motion. While its end with the roller (10), where the convertible motion is applied, reciprocates on a straight line, forced by the geometry of the suspension of the sides of the journals of the main (25) and secondary (26) crankshaft respectively. The direction of the applied convertible force F in relation to the body of the pushrod (5) diverges slightly to the left from the vertical or perpendicular. The crankshafts are equipped with two gears of equal diameter (7), (8) respectively, coming in coupling with an intermediate gear (6) of the same diameter, so that the same rotational speed, direction and angular displacement thereof. The connection yoke of the pushrod (9) is a body, which surrounds the pushrod (5), with an intermediate interposition of linear bearing or shoes of a low friction coefficient (27) and around the position of the journal (4) of the secondary crankshaft (2), by which the connection must be made, has holes in which the journal (4) is inserted. The journal (4) does not constitute a body of a whole pin, passing through the yoke, since in its interior the pushrod (5) is arranged and moves as appropriate, thus instead of a journal of one piece, there are two pins, which are shown in Fig. 5. In case of large engines, the ends of the pushrods tying with the journals of the main crankshafts (3), should be of a dividable type, as in the case of a conventional pushrods of the various engines. It is apparent that depending on the length of the sides or fixation arms (25), (26) of the journals (3), (4), the length of the body of the pushrod (5) will be analogous, forming the respective dynamic triangles and obtuse trapezoids. Figure 1 shows in perspective view and plan view respectively, the elements and the influence of the applied convertible force F. Here exemplarily the member applying the convertible force (12), which is retained at the proper position to avoid lateral positions during the operation of the engine, with the guides (11), the member is always in contact with the roller (10) of the end of the pushrod, as well as with the above roller (13) with the cam (14), which are fixed with the pin, and retained on the body or shell of the engine (28), so that the increase in the compression, which may be imposed from the other end (16) of the reinforcing arm (15) of the applied convertible force. The crankshafts are located at position 0 or 360 degrees. The rotational stresses of the crankshafts (1), (2) and of the gears (7), (8) are shown with respective arrows, while the pushrod (5) moves to the right. It is apparent that the size of the turning pair caused on the main crankshaft (1), as long as the length of the pushrod (5) is sufficiently large, amplified by the reinforcing arm (15), which with the respective intensity of the applied convertible force, may supersede the resistances of load and developed frictions, pushing the journal (3) in the direction of the path it covers, pulling the crankshaft (1) with almost constant maximum intensity.

Finally, it should be noted that if the right end part of the pushrod (5), on which the convertible force is applied, is manufactured by two coaxial arms, the one sliding or reciprocating in the other, then the roller (10) may be replaced by a simpler element, which will remain in the same position, does not move, while the cooperation of the coaxial arms will allow the production of work by the engine. The left end of the pushrod (5) in the area where it is fixed with the journal (3) of the main crankshafts (1), for large-size engines will be of the dividable type, for facilitating maintenance and assemblying.

Figure 2 shows in front view the two crankshafts (1), (2) which are turned by 90 degrees. The applied convertible force F is absolutely vertical to the end of the body of the pushrod (5), and the developed pair of torque on the crankshafts has received its highest value, the pushrod (5) is instantly immobilized, and ready to reverse motion path to the left.

Figure 3 shows the crankshafts (1), (2) which are presented in perspective, having been turned and located simultaneously at 180 degrees. A position reverse to that of 0 or 360 degrees of figure 1. The pushrod (5) moves to the left, while on the crankshafts it is apparent that the same stress of clockwise rotational motion dominates, since on the roller (10) conveying the applied convertible force on the end of the pushrod (5) motion is applied on the vertical direction downwards. The direction of the convertible force deviates slightly to the left from the body of the pushrod (5).

Figure 4 shows the crankshafts, due to the same reason, of the applied convertible force on the other end of the pushrod (5), have been displaced and presented in front view, at a position of 270 degrees. The reasons for continuing the turning of the crankshafts (1) have not been eliminated, since being free on their bearings, with the applied convertible force having such intensity value which exceeds the resistances of the frictions and applied load of the engine, the crankshafts continue to turn. The applied convertible force F has again an instant vertical or perpendicutar direction to the end of the body of the pushrod (5), with the roller (10), and this has been instantly immobilized, ready to start a linear right motion.

Figure 5 shows in plan view all the engine, which has two crankshafts (1), (2), a major and a secondary one having each two journals with all their accessories, as has been explained. It also shows the proposed position of the motion stop (23), where if the engine had two such stops in series, it would be allowed to reverse more easily and by selection, by braking one of them, without additional machine elements. That is, equipment on both sides of the end of the pushrods (5), with members applying convertible force with their guides (11), (12) respectively, applied force reinforcement arms (15), or any other elements selected to serve this purpose. The bearings of the main crankshaft (17) and of the secondary crankshafts (18) are shown. Also, the bearing for addressing axial displacements of the main crankshaft (19), (20), as wells as those of the secondary crankshaft (21), (22) are shown. In perspective view on the side the body of the yoke (9) is shown, which in case of large-size engines are of dividable type.

Figure 6 shows in front view an alternative embodiment of the way of parallel or simultaneous turning of the two crankshaft (1), (2). Instead of gears, each crankshaft has a chain wheel (29), (3) at each one end, which are connected between them by a chain (24). The specific alternative embodiment is used in applications of small- and medium-sized engines. The engine has exactly the same machine elements as the above-mentioned engine, and behaves in exactly the same way.

No particular mention is made to the classes and kinds of effectors through which the applied force to be converted may be generated, preserved and controlled, since they can be selected from commercially available products.

It should be noted that the description of the invention was made with reference to an exemplary, non-limiting embodiment. Any alteration or modification regarding the shape, size, dimensions, construction and assembly materials and components employed, application fields, as long as not constituting an inventive step and not contributing to prior art, are considered encompassed in the present invention.

## Claims

1. A converter of dynamic to rotational motion of two crankshafts, consisting of a main crankshaft (1) with a main crankshaft gear (7) and a main crankshaft journal (3), and a secondary crankshaft (2) with a secondary crankshaft gear (8) of the same diameter and a secondary crankshaft journal (4), coupled between them via a coupling gear (6) of the same diameter, and a push rod (5) connecting the journals (3), (4) with a yoke (9), **characterized in that** force applied on a convey roller (10) forces it to execute linear reciprocal motion driving also the pushrod (5) to oscillate, which rotates continuously the two interconnected crankshafts (1), (2).

2. A converter of dynamic to rotational motion of two crankshafts according to claim 1, **characterized in that** it has an amplification arm (15) being in permanent contact with a force application member (12) and a guide of the force application member (11) with the convey roller (10) of the pushrod (5), amplifying the size of the applied force causing the rotation of the crankshafts (1), (2).

3. A converter of dynamic to rotational motion of two crankshafts, consisting of a main crankshaft (1) with a main crankshaft chain wheel (29) and a main crankshaft journal (3), and a secondary crankshaft (2) with a secondary crankshaft chain wheel (30) of the same diameter and a secondary crankshaft journal (4), coupled between them via a coupling chain (24), and a push rod (5) connecting the journals (3), (4) with a yoke (9), **characterized in that** force applied on a convey roller (10) forces it to execute linear reciprocal motion driving also the pushrod (5) to oscillate, which rotates continuously the two interconnected crankshafts (1), (2).
